# DEMANDE DE BREVET EUROPEEN

(11) **EP 0 911 184 A2**
(43) Date de publication de la demande: **28.04.1999**
(21) Numéro de dépôt: 98490026.6
(22) Date de dépôt: 16.10.1998
(51) Int. Cl.: B60B 33/02

(54) **Dispositif d'assemblage d'une roue telle que, notamment roulette et/ou roue à bandage**

(30) Priorité: 16.10.1997 FR 9713192
(71) Demandeur: Société d'Exploitation de la Manufacture Parisienne de Roulettes "M.P.R."Société Anonyme, 95400 Arnouville les Gonesse (FR)
(72) Inventeur: Taddei, Thierry, 95400 Villiers le Bel (FR); Mazgaj, Patrick, 95400 Villiers le Bel (FR)
(74) Mandataire: Duthoit, Michel

(57) **Abrégé**

La présente invention concerne un dispositif d'assemblage (1) d'une roue (2) telle que, notamment, roulette et/ou roue à bandage, sur un tube (3), ladite roue (2) présentant une chape (4) par rapport à laquelle elle est montée en rotation autour d'un axe (5) sensiblement horizontal.

Selon l'invention, ledit dispositif comprend une tige (6) coopérant avec ladite chape (4) et introduite au moins partiellement dans ledit tube (3), ainsi qu'une saillie (7), apte à être introduite dans au moins un orifice transversal (8), prévu sur ledit tube (3), et dans un logement (9), prévu dans ladite tige (6), cette dernière présentant une rainure (10), apte à accueillir une extrémité dudit tube (3).

## Description

La présente invention concerne un dispositif d'assemblage d'une roue telle que, notamment, roulette et/ou roue à bandage, sur un tube, ainsi qu'une roue et un tube, notamment d'échafaudage, équipés d'un tel dispositif. Elle concerne également l'ensemble formé par une roue et un tube assemblés par ledit dispositif.

Il est à noter que, bien que plus particulièrement prévu pour permettre l'assemblage de roulette et/ou roue à bandage sur des échafaudages, l'invention pourra, de manière plus large, être utilisée dans tous les secteurs de l'activité économique dans lesquels on est amené à monter une roue sur un tube.

Actuellement, il est connu d'équiper les échafaudages de roulettes afin de pouvoir les déplacer plus facilement.

Plus cela, on utilise, par exemple, une contre-platine boulonnée sur la platine par rapport à laquelle la roulette est articulée et l'on soude les tubes de base de l'échafaudage sur ladite contre-platine.

Un premier inconvénient d'une telle solution est qu'elle présente un coût élevé, à la fois en pièces et en main d'oeuvre. Un autre inconvénient est qu'elle entraîne une altération du traitement de surface et des qualités, notamment du tube.

De plus, la soudure à effectuer est difficile ou limite le choix des matériaux qui peuvent être employés. Elle engendre en outre une zone de vulnérabilité si elle est mal exécutée.

On connaît également des dispositifs dans lesquels les tubes de base des échafaudages sont emboîtés sur un pion prévu sur un capot assujetti directement ou indirectement auxdites roulettes, une soudure bouchon à l'arc étant effectuée au sommet du pion à l'intérieur dudit tube.

Toutefois, une telle solution présente sensiblement les mêmes inconvénients que ceux précédemment évoqués.

Le but de la présente invention est de proposer un dispositif d'assemblage d'une roue telle que, notamment, roulette et/ou à roue à bandage, sur un tube, qui pallie les inconvénients précités en présentant une plus grande stabilité et en offrant un meilleur niveau de sécurité.

Un autre but de la présente invention est de proposer un dispositif d'assemblage d'une roue telle que, notamment, roulette et/ou roue à bandage, sur un tube, qui puisse être mis en oeuvre avec des tubes de différentes qualités.

Un autre but de la présente invention est de proposer un dispositif d'assemblage d'une roue telle que, notamment, roulette et/ou roue à bandage sur un tube, qui puisse être mis en oeuvre quel que soit le matériau employé pour ladite roue et/ou ledit tube.

Un autre but de la présente invention est de proposer un dispositif d'assemblage d'une roue telle que, notamment, roulette et/ou roue à bandage, sur un tube, qui n'altère pas l'aspect de surface ni les qualités structurelles, notamment, dudit tube.

Un autre but de la présente invention est de proposer un dispositif d'assemblage d'une roue telle que, notamment, roulette et/ou roue à bandage, sur un tube, qui soit indémontable.

Un avantage de la présente invention est d'être de coût relativement faible.

D'autres buts et avantages de la présente invention apparaîtront au cours de la description qui va suivre qui n'est donnée qu'à titre indicatif et qui n'a pas pour but de la limiter.

L'invention concerne un dispositif d'assemblage d'une roue telle que, notamment, roulette et/ou roue à bandage, sur un tube, ladite roue présentant une chape par rapport à laquelle elle est montée en rotation autour d'un axe sensiblement horizontal, caractérisé par le fait qu'il comprend une tige, coopérant avec ladite chape et introduite au moins partiellement dans ledit tube, ainsi qu'une saillie, apte à être introduite dans au moins un orifice transversal, prévu sur ledit tube, et dans un logement, prévu dans ladite tige, cette dernière présentant une rainure, apte à accueillir une extrémité dudit tube.

L'invention concerne également une roue et un tube, notamment d'échafaudage, équipés du dispositif d'assemblage décrit plus haut.

Elle concerne en outre un ensemble formé par une roue et un tube assemblés par le même dispositif.

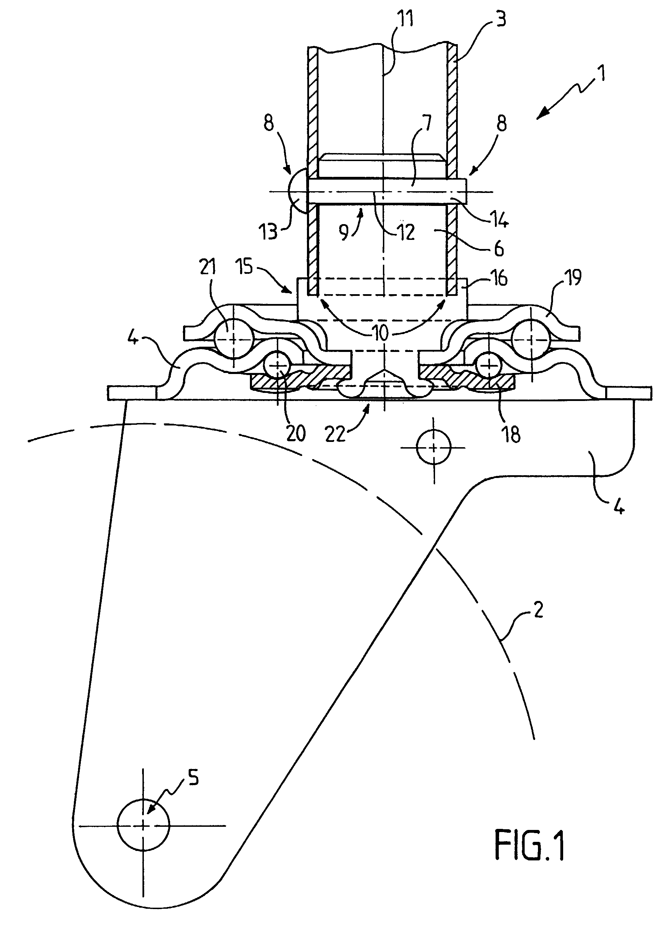

La présente invention sera mieux comprise à la lecture de la description suivante accompagnée de la figure 1 en annexe qui en fait partie intégrante et qui représente, selon un plan de coupe diamétral, un exemple du dispositif d'assemblage conforme à l'invention.

La présente invention concerne un dispositif d'assemblage d'une roue telle que, notamment, roulette et/ou à bandage sur un tube.

Bien que plus particulièrement prévue pour l'assemblage de roulette et/ou roue à bandage sur des tubes d'échafaudage, elle pourra être utilisée de manière plus large dans tous les secteurs de l'activité économique dans lesquels on est amené à monter des roues sur un tube.

Comme représenté à la figure 1, le dispositif 1 conforme à l'invention permet d'assembler une roue 2, illustrée schématiquement en pointillés, sur un tube 3. Ladite roue 2 présente une chape 4 par rapport à laquelle elle est montée en rotation autour d'un axe 5 sensiblement horizontal.

Pour permettre le montage, le dispositif d'assemblage 1 comprend, selon l'invention, une tige 6 coopérant avec ladite chape 4 et introduite au moins partiellement dans ledit tube 3. Il comprend également une saillie 7, apte à être introduite dans au moins un orifice transversal 8, prévu sur ledit tube 3, et dans un logement 9, prévu dans ladite tige 6, cette dernière présentant une rainure 10, apte à accueillir une extrémité dudit tube 3.

Ladite rainure 10 présente, par exemple, un même profil que la section dudit tube 3, tout du moins dans son extrémité avec laquelle ladite rainure 10 coopère. De plus, le fond de cette dernière est apte, notamment, à se trouver en vis-à-vis des bords longitudinaux dudit tube 3, ceux-ci pouvant reposer sur le fond de ladite rainure 10.

Ladite saillie 7 permet ainsi, au moins, l'immobilisation en rotation et/ou en translation dudit tube 3 par rapport à ladite tige 6. Quant à ladite rainure 10, elle permet, notamment, de supporter au moins partiellement le poids dudit tube 3, et la reprise de charge à ce niveau.

Il est également à noter qu'en cas d'utilisation du tube 3 constitué, par exemple, d'une tôle cintrée et soudée le long d'une ligne de joint 11, ladite rainure 10 permet également de diminuer les risques de rupture au niveau de ladite ligne de joint 11 lorsque ledit tube 3 est soumis à des contraintes de flexion.

Ledit tube 3 et/ou ladite tige 6 sont, par exemple, cylindriques, ladite rainure 10 étant alors, notamment, annulaire.

Lors du montage, les jeux entre les différentes pièces sont, par exemple, d'environ un ou deux dizièmes de millimètre, ledit tube 3 étant emmanché sur ladite tige 6 et encastré dans ladite rainure 10 puis ladite saillie 7 introduite à travers le ou lesdits orifices 8 dans ledit logement 9.

Afin de rattraper lesdits jeux de montage, ladite saillie 7 est, par exemple, soumise à une expansion après son introduction dans le ou lesdits orifices 8 et ledit logement 9. Ceci permet, notamment, d'empêcher les démontages accidentels et/ou d'augmenter la résistance à la flexion et à l'arrachement de l'ensemble formé par ledit tube 3 et ladite tige 6, les mouvements relatifs de ces deux pièces l'une par rapport à l'autre étant empêchés.

Ledit logement 9 est constitué, par exemple, par une lumière débouchant à travers ladite tige 6. De plus, ladite saillie 7 est constituée, notamment, par un rivet, apte à déboucher à travers ladite lumière 9 de part et d'autre dudit tube 3. Pour cela, celui-ci présente deux dits orifices 8, aptes à se trouver dans le prolongement de ladite lumière 9 à chacune de ses extrémités.

Ladite lumière 9 est, par exemple, diamétrale, lesdits deux orifices 8 étant alors diamétralement opposés.

Dans le cas de l'utilisation de tubes 3 présentant une dite ligne de pliage 11, lesdits deux orifices 8 seront orientés, par exemple, selon une droite 12 perpendiculaire au plan diamétral passant par ladite ligne de joint 11.

Ledit rivet 7 se présente, notamment, sous la forme d'une tige pleine 14, lisse, équipée d'une tête 13.

Selon le mode de réalisation évoqué plus haut, l'expansion de la saillie est réalisée par exemple, par sertissage dudit rivet 7. Pour cela, on vient, notamment, frapper axialement ladite extrémité débouchante 14, la tête 13 dudit rivet 7 étant maintenue par ailleurs.

Cela étant, ladite tige 6 comprend, par exemple, un épaulement 15 présentant ladite rainure 10. Afin d'également ratraper les jeux de montage à ce niveau, la bague 16, définie par ledit épaulement 15 autour de ladite rainure 10, est, éventuellement, apte à être déformée en direction dudit tube 3. On renforce ainsi de nouveau la cohésion de ladite tige 6 et dudit tube 3.

L'invention concerne également une roue 2 équipée du dispositif d'assemblage 1. Il s'agit, par exemple, d'une roue présentant une bande de roulement, montée en rotation par l'intermédiaire d'un moyeu sur un essieu, ce dernier étant assujetti à ladite chape 4.

Selon le mode particulier de réalisation illustré, ladite tige 6 est constituée d'un pivot autour duquel ladite roue 2 est prévue pivotante par rapport audit tube 3 selon un axe sensiblement vertical, correspondant éventuellement à l'axe longitudinal dudit pivot 6. Ledit tube 3 et ladite rainure 10, sont, par exemple, orientés selon ledit axe de pivotement.

Ladite chape 4 est, par exemple, articulée autour dudit pivot - 6, notamment entre un capot inférieur 18 et un capot supérieur 19, tous les deux assujettis audit pivot 6. L'articulation est obtenue, notamment, grâce à l'utilisation de deux rangées de billes 20, 21 respectivement prévus entre la chape 4 et le capot inférieur 18 et ladite chape 4 et le capot supérieur 19.

Selon une variante de réalisation, ledit capot supérieur pourra être remplacé par une platine.

Pour permettre le montage, ledit pivot 6 présente, par exemple, un ergot 22 apte à coopérer avec lesdits capots inférieur 18 et supérieur 19.

L'invention concerne également un tube 3, notamment d'échafaudage, équipé du dispositif d'assemblage 1 décrit plus haut.

Ledit tube 3 pourra éventuellement présenter des trous, non représentés, de fixation et de réglage de la hauteur à son extrémité opposée à celle coopérant avec ladite tige 6. Ils permettront, par exemple, le montage sur d'une armature tubulaire d'échafaudage.

Enfin, l'invention concerne un ensemble formé par une roue 2 et un tube 3 assemblés selon le dispositif 1 décrit plus haut.

Il est d'ailleurs à noter que, contrairement au dispositif utilisant des soudures antérieurement connues, un tel ensemble permet des gains d'encombrement, ledit tube 3 étant situé plus près de ladite roue 2.

Naturellement, d'autres modes de mise en oeuvre, à la portée de l'homme de l'art, auraient pu être envisagés sans pour autant sortir du cadre de l'invention.

## Revendications

1. Dispositif d'assemblage (1) d'une roue (2), telle que, notamment, roulette et/ou roue à bandage, sur un tube (3), ladite roue (2) présentant une chape (4) par rapport à laquelle elle est montée en rotation autour d'un axe (5) sensiblement horizontal, caractérisé par le fait qu'il comprend une tige (6), coopérant avec ladite chape (4) et introduite au moins partiellement dans ledit tube (3), ainsi qu'une saillie (7), apte à être introduite dans au moins un orifice (8) transversal, prévu sur ledit tube (3), et dans un logement (9), prévu dans ladite tige (6), cette dernière présentant une rainure (10) apte à accueillir une extrémité dudit tube (3).

2. Dispositif selon la revendication 1, dans lequel ladite saillie (7) est soumise à une expansion après son introduction dans ledit ou lesdits orifices (8) et ledit logement (9) pour permettre un rattrapage des jeux de montage.

3. Dispositif selon la revendication 2, dans lequel ledit logement (9) est constitué par une lumière débouchante à travers ladite tige (6) et dans lequel ladite saillie (7) est constituée par un rivet, apte à déboucher à travers ladite lumière (9) de part et d'autre dudit tube (3), prévu présentant deux dits orifices (8), aptes à se trouver dans le prolongement de ladite lumière (9), à chacune de ses extrémités.

4. Dispositif selon la revendication 3, dans lequel ladite expansion de la saillie est réalisée par sertissage dudit rivet (7).

5. Dispositif selon la revendication 1, dans lequel ladite tige (6) comprend un épaulement (15) présentant ladite rainure (10).

6. Dispositif selon la revendication 5, comprenant une bague (16), définie par ledit épaulement (15) autour de ladite rainure (10), ladite bague (16) étant apte à être déformée vers ledit tube (3) pour permettre un rattrapage des jeux de montage.

7. Roue équipée du dispositif d'assemblage selon la revendication 1.

8. Roue selon la revendication 7, dans laquelle ladite tige (6) est constituée d'un pivot autour duquel ladite roue (2) est prévue pivotante par rapport audit tube (3) selon un axe sensiblement vertical.

9. Tube (9), notamment d'échaufage, équipé du dispositif d'assemblage selon la revendication 1.

10. Ensemble formé par une roue et un tube assemblés par le dispositif selon la revendication 1.
